# EUROPEAN PATENT APPLICATION

(11) **EP 2 784 773 A1**
(43) Date of publication of application: **01.10.2014**
(21) Application number: 13780683.2
(22) Date of filing: 19.04.2013
(51) Int. Cl.: G10H 1/00, H04L 12/70

(54) **SERVER AND DATA SYNCHRONIZATION SYSTEM**

(30) Priority: 25.04.2012 JP 2012099955
(71) Applicant: NTT Docomo, Inc., Tokyo 100-6150 (JP)
(72) Inventor: TSUKAMOTO, Masakatsu, Tokyo 100-6150 (JP); TAGAYA, Masashi, Tokyo 100-6150 (JP); MORINAGA, Yasuo, Tokyo 100-6150 (JP)
(74) Representative: MERH-IP Matias Erny Reichl Hoffmann
(86) International application number: PCT/JP2013/061632
(87) International publication number: WO 2013/161706

(57) **Abstract**

There is provided a server that enables any piece of mobile equipment on a mobile communication network to synchronously receive data sent from two or more pieces of mobile equipment. The server includes a terminal managing part receiving synchronizing terminal information from each of the pieces of mobile equipment that specifies a group to which the piece of mobile equipment belongs and whether the piece of mobile equipment participates in the group as a session terminal or an audience terminal, a transmission time measuring part measuring the transmission time from each of the pieces of mobile equipment to the server, a route establishing part determining whether to change a route from each of the session terminals belonging to the same group to an alternative route on the basis of whether or not the transmission times from the session terminals are practically equal and establishing a route, a route sending part sending the established route to the session terminal, an SV synchronous data receiving part receiving data sent through the established route, and an SV synchronous data sending part sending the received data to the audience terminal in the same group as the pieces of mobile equipment that have sent the data.

## Description

### [TECHNICAL FIELD]

The present invention relates to a server and a data synchronization system that synchronize data sent from two or more pieces of mobile equipment on a mobile communication network.

### [BACKGROUND ART]

Techniques that enable players and singers to perform musical sessions such as musical ensembles and duets over the Internet are known. For example, in a musical session system disclosed in Patent literature 1, a terminal (A) sends musical performance information representing a playing operation on the terminal (A) to another terminal (B) while providing the musical performance information to a musical sound generator of the terminal (A) with a predetermined delay, thereby enabling both of the terminals (A, B) to simultaneously output musical sound according to the playing operation on the terminal (A).

Also known are videoconference systems, which allow people at remote locations to conduct a conference in real time over the Internet in synchronization with one another.

### [PRIOR ART LITERATURE]

### [PATENT LITERATURE]

Patent literature 1: Japanese Registered Patent No. 4259329

### [SUMMARY OF THE INVENTION]

### [PROBLEMS TO BE SOLVED BY THE INVENTION]

To implement these internet-based synchronization systems on a mobile communication network, so-called padding is performed in which dummy packets are inserted to adjust data arrival time differences caused by differences in transmission paths. Since packets inserted by the padding are indistinguishable from packets that are inserted in silent intervals, a receiving terminal can confuse padding with a silent interval and perform wrong processing, which can result in failure of synchronization between devices. Specifically, when a receiving terminal confuses padding data as silence, the receiving terminal resumes RTP (Real-time Transport Protocol) processing on non-silent data following the pudding data out of time, resulting in loss of the leading potion of sound. An object of the present invention is to provide a server that enables any piece of mobile equipment on a mobile communication network to synchronously receive data sent from two or more pieces of mobile equipment.

### [MEANS TO SOLVE THE PROBLEMS]

A server of the present invention includes a terminal managing part, a transmission time measuring part, a route establishing part, a route sending part, an SV synchronous data receiving part and an SV synchronous data sending part.

The terminal managing part receives synchronizing-terminal information from mobile equipment. The synchronizing terminal information indicates which group the mobile equipment belongs to and whether the mobile equipment participates in the group as a session terminal which sends data to the group or an audience terminal which receives data. The transmission time measuring part measures the transmission time from mobile equipment to the server. The route establishing part determines whether or not to change a route from mobile equipment that acts as a session terminal to the server to an alternative route that passes through any other piece of mobile equipment on the basis of whether or not the transmission times from the pieces of mobile equipment that act as session terminals belonging to the same group to the server are practically equal and establishes a route on the basis of the determination. The route sending part sends the established route to the mobile equipment that acts as a session terminal. The SV synchronous data receiving part receives data sent from mobile equipment that acts as a session terminal along an established route. The SV synchronous data sending part sends the received data to mobile equipment that acts as an audience terminal in the same group as the mobile equipment that sent the received data.

### [EFFECTS OF THE INVENTION]

A server according to the present invention enables any mobile equipment on a mobile communication network to synchronously receive data sent from two or more mobile equipment.

### [BRIEF DESCRIPTION OF THE DRAWINGS]

Fig. 1A is a schematic diagram illustrating the relationship of a server and mobile equipment of the present invention to a mobile communication network;
Fig. 1B is a schematic diagram illustrating the relationship of a server and mobile equipment of the present invention to a mobile communication network;
Fig. 2A is a diagram conceptually illustrating transmission times from pieces of mobile equipment to a server;
Fig. 2B is a diagram illustrating an example of establishment of routes that equalize transmission times from session terminals to a server;
Fig. 3 is a block diagram illustrating a configuration of a data synchronization system of a first embodiment;
Fig. 4 is a sequence diagram illustrating operations of the data synchronization system of the first embodiment;
Fig. 5 is a block diagram illustrating a configuration of a data synchronization system of a second embodiment;
Fig. 6 is a sequence diagram illustrating operations of the data synchronization system of the second embodiment;
Fig. 7 is a block diagram illustrating a configuration of a synchronization system of a third embodiment;
Fig. 8 is a sequence diagram illustrating operations of the data synchronization system of the third embodiment;
Fig. 9 is a block diagram illustrating a configuration of a data synchronization system of a fourth embodiment;
Fig. 10 is a sequence diagram illustrating operations of the data synchronization system of the fourth embodiment;
Fig. 11 is block diagram illustrating a configuration of a data synchronization system of a fifth embodiment;
Fig. 12 is a sequence diagram illustrating operations of the data synchronization system of the fifth embodiment;
Fig. 13A is a diagram illustrating an example of a table stored in a table storage of the first and second embodiments;
Fig. 13B is a diagram illustrating an example of a table stored in a table storage of the third embodiment;
Fig. 13C is a diagram illustrating an example of a table stored in a table storage of the fourth embodiment; and
Fig. 13D is a diagram illustrating an example of a table stored in a table storage of the fifth embodiment.

### DETAILED DESCRIPTION OF THE EMBODIMENTS

Terms used herein will be described below.

### <Mobile equipment>

Any portable device that has wireless communication capabilities is referred to as mobile equipment. The notion of mobile equipment encompasses mobile phones, PDAs, personal computers and the like.

### <Group>

A set of pieces of mobile equipment participating in synchronous data transmission (reception) is herein referred to as a group. A server according to the present invention manages pieces of mobile equipment on a group-by-group basis.

### <Session terminal>

Mobile equipment that attempts to participate in a group as a data sending terminal is herein referred to as a session terminal. Taking the musical ensemble mentioned above as an example, a session terminal generates musical sound and sends the generated musical sound to audience terminals, which will be described below. In the case of the videoconference system mentioned above, a session terminal acts as a presenter.

### <Audience terminal>

Mobile equipment that attempts to participate in a group as a data receiving terminal is herein referred to as an audience terminal. Taking the musical ensemble as an example, an audience terminal listens to music sent from a session terminal, that is, acts as an audience member. In the case of the videoconference mentioned above, an audience terminal listens to a presentation by a presenter, that is, acts as an audience member. Note that mobile equipment can set itself as both of session and audience terminals. In this case, the mobile equipment sends data as a session terminal and receives as an audience terminal both of the data it has sent and data sent from another session terminal simultaneously after a certain period of time has elapsed since sending the data as the session terminal.

A server according to the present invention can change data transmission routes to enable data sent from a plurality of session terminals to be received at an audience terminal in the same group with synchronized timing.

### <Transmission time>

Transmission time represents the length of time it takes for data to be transmitted from mobile equipment to a server. For example, transmission time (round-trip time: RTT) can be measured by measuring the time of transmission of a measuring signal (such as a ping) and the time of arrival of the measuring signal sent back. In the embodiments described below, transmission time is represented by a hypothetical value for convenience of explanation.

### <Route>

The term route as used herein refers to a communication path from mobile equipment to a server. Since the mobile equipment and the server exchange data over a mobile communication network, data sent from the mobile equipment to the server and data sent from the server to the mobile equipment pass through one or more base stations and switching centers. A communication path automatically established by a switching center without specification of a base station, switching center or communication method by the server is herein simply referred to as a route.

### <Alternative route>

A route that starts at a piece of mobile equipment, reaches a server, then goes from the server to another piece of mobile equipment, and returns from the other piece of the mobile equipment to the server is referred to as an alternative route. According to the present invention, an alternative route, instead of padding, is effectively used to adjust a delay, thereby achieving data synchronization.

### <Intervening-point-specified route>

A route from a piece of mobile equipment to a server that passes through a switching center and a base station that are specified by the server is herein referred to as an intervening-point-specified route in order to distinguish such route from a "route" for which an intervening station is not specified by the server.

### <Communication-method-specified route>

A route from a piece of mobile equipment to a server for which a communication method to be used is specified by the server is referred to as a communication-method-specified route in order to distinguish such route from a "route" for which a communication method is not specified by the server.

### <Intervening-point-and-communication-method-specified route>

A route from a piece of mobile equipment to a server for which a base station and a switching center to pass through and a communication method to be used are specified by the server is referred to as an Intervening-point-and-communication-method-specified route in order to distinguish such route from a "route" for which an intervening stations or a communication method is not specified by the server.

### <Data/synchronous data>

Data sent from a session terminal and synchronously received at audience terminals is herein referred to simply as data or as synchronous data. Types of data include audio information and video information, for example.

Embodiments of the present invention will be described below in detail. Components that have the same functions are given the same reference numerals and repeated description thereof will be omitted.

### <Overview of the Invention>

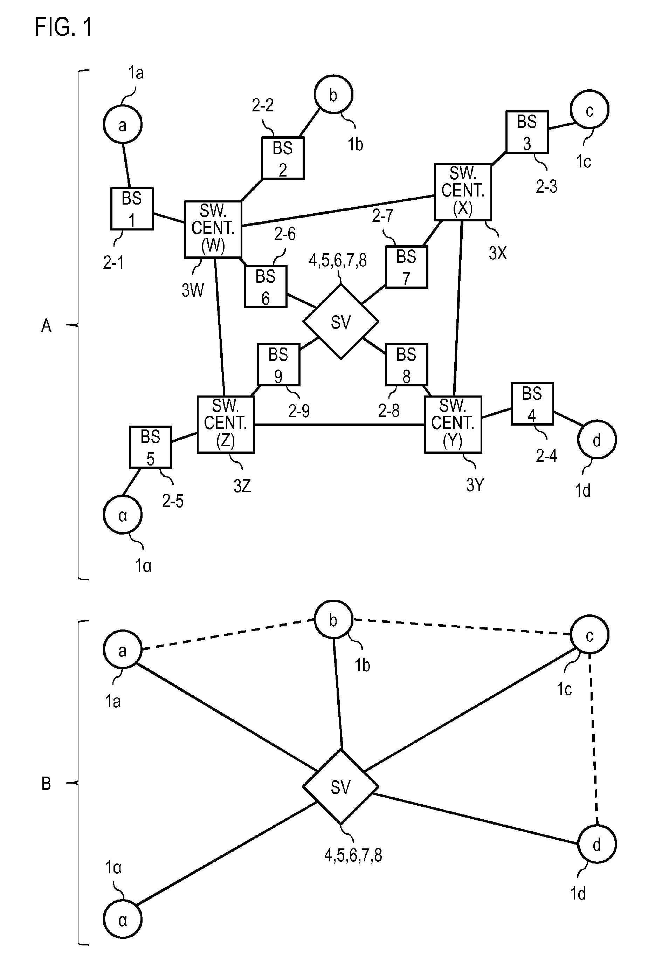

The relationship of a server and mobile equipment of the present invention to a mobile communication network will be described with reference to Fig. 1. Figs. 1A and 1B are schematic diagrams illustrating the relationship of the server and mobile equipment of the present invention to a mobile communication network. As illustrated in Fig. 1, for example five pieces of mobile equipment (mobile equipment 1a, 1b, 1c 1d and 1α) and one server (SV) 4 are able to communication with each other over a mobile communication network. There are intervening base stations (BS) and switching centers on a route between each piece of mobile equipment and the server. In the example in Fig. 1, for example, mobile equipment 1a can establish a route that passes through base station 2-1 (BS1), switching center 3W (W), and base station 2-6 (BS6). Mobile equipment 1b can establish a route that passes through base station 2-2 (BS2), switching center 3W (W) and base station 2-6 (BS6). Mobile equipment 1c can establish a route that passes through base station 2-3 (BS3), switching center 3X (X), and base station 2-7 (BS7).

Routes are not limited to the ones presented above. For example, mobile equipment 1a can also establish a route that passes through switching center 3Z (Z) and base station 2-9 (BS9), in addition to switching center 3W (W). Note that the example in Fig. 1 schematically illustrates the relationship between the present invention and a mobile communication network and therefore only small numbers of base stations and switching centers are depicted for simplicity. In reality, there can be more intervening switching centers between each piece of mobile equipment 1 and the server than depicted in Fig. 1.

Routing methods in packet communication on a mobile communication network in general can be broadly classified as a method that determines a route at the start of transmission by combining sending and receiving terminal stations and a method that routes at switching centers in sequence on a network to successively determine an end-to-end route. Typically, one of these methods is used to select a route that has the shortest delay by taking traffic into consideration.

A representation in Fig. 1B for explaining hypothetical transmission times, which will be described later, will be described below. Fig. 1B schematically illustrates the relationship of a server and mobile equipment of the present invention to a mobile communication network like Fig. 1A but in a representation different from Fig. 1A. The solid lines that directly link pieces of mobile equipment 1 to the server in Fig. 1B represent the routes described above. Intervening switching centers and base stations on the routes represented by the solid lines are omitted from Fig. 1B. A dashed line that directly links one piece of mobile equipment 1 to another piece of mobile equipment 1 represents a hypothetical communication path between the terminals that goes from one of the pieces of mobile equipment to the server and goes from the server to the other piece of mobile equipment. For example, the dashed line that links between mobile equipment 1a and mobile equipment 1b represents a communication path that goes from mobile equipment 1a, passes through the server and reaches mobile equipment 1b. Accordingly, the dashed line that links between mobile equipment 1a and mobile equipment 1b represents a communication path that connects mobile equipment 1a with mobile equipment 1b through, for example, base station 2-1, switching center 3W, base station 2-6, the server, base station 2-6, switching center 3W and then base station 2-2. At the same time, the dashed line that links between mobile equipment 1a and mobile equipment 1b also represents a communication path that connects mobile equipment 1a with mobile equipment 1b through, for example, base station 2-1, switching center 3W, switching center 3Z, base station 2-9, the server, base station 2-6, switching center 3W and base station 2-2. In this way, a dashed line represents multiple possible path combinations. However, a path actually used in communication is established by each switching center by taking factors such as traffic into consideration.

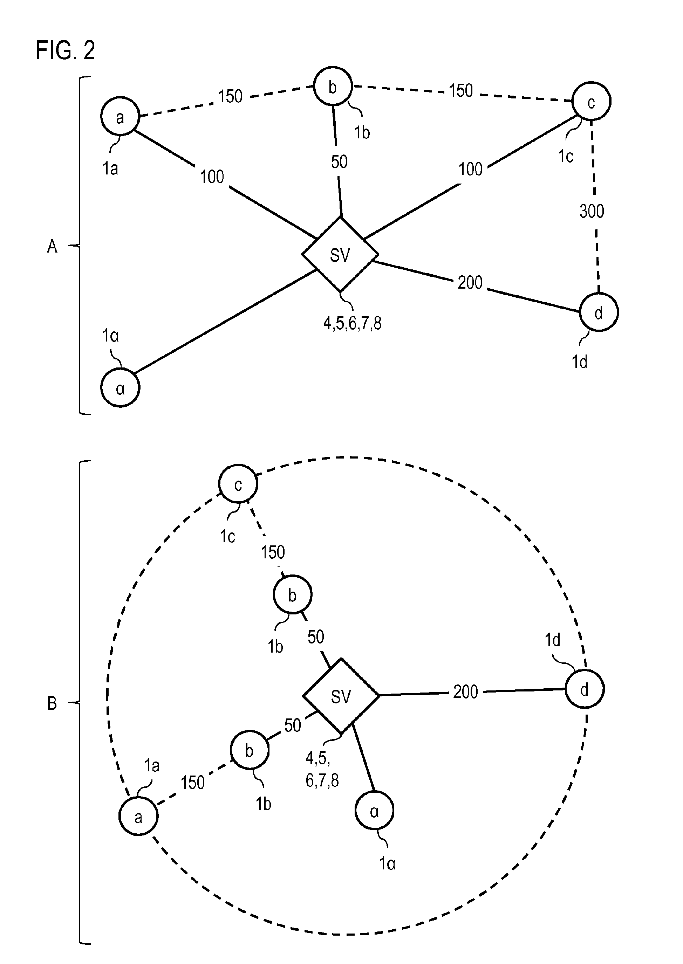

Transmission time from mobile equipment to the server will be further described with respect to the representation in Fig. 1B and reference to Figs. 2A and 2B. Fig. 2A is a diagram conceptually illustrating transmission time from each piece of mobile equipment to the server. For the convenience of explanation, transmission time will be considered to be a conceptual quantity with no unit. It is assumed herein that there is not a significant difference between the speed of transmission from mobile equipment 1 to the server (upload traffic speed) and the speed of transmission from the server to mobile equipment 1 (download traffic speed) and therefore a distinction between upload and download transmission times will not be mad herein. On this precondition, it is assumed that transmission time over a communication path represented by the dashed line that links between mobile equipment 1a and mobile equipment 1b is 150, for example, as illustrated in Fig. 2A. It is also assumed that transmission time over a communication path between mobile equipment 1b and mobile equipment 1c is 150, transmission time over a communication path between mobile equipment 1c and mobile equipment 1d is 300, transmission time over a route between mobile equipment 1a and the server is 100, transmission time over a route between the mobile equipment 1b and the server is 50, transmission time over a route between the mobile equipment 1c and the server is 100, and transmission time over a route between mobile equipment 1d and the server is 200. Here, suppose that the pieces of mobile equipment 1a, 1b, 1c and 1d act as session terminals which send data whereas mobile equipment 1 α acts as an audience terminal which receives the data. Also suppose that packets from the pieces of mobile equipment 1a, 1b, 1c and 1d need to be synchronized and received at mobile equipment 1α. To meet this need, for example the server may receive transmission data from the pieces of mobile equipment 1a, 1b, 1c and 1d, apply padding to data that arrived earlier and then send the data to mobile equipment 1α which acts as an audience terminal. In this method, however, processing applied by mobile equipment 1α to the silent data added by the server can prohibit synchronous communication as described earlier. The present invention establishes alternative routes as appropriate to reduce differences between transmission times between pieces of mobile equipment 1 and the server. Specifically, in order to allow audience terminal 1α to synchronously receive data from session terminals 1a, 1c and 1d under the conditions illustrated in Fig. 2A, alternative routes are established as described below. Mobile equipment 1a transmits data to the server (with a transmission time of 50) through mobile equipment 1b (with a transmission time of 150), so that the total transmission time is 200. Mobile equipment 1c transmits data to the server (with a transmission time of 50) through mobile equipment 1b (with a transmission time of 150), so that the total transmission time is 200. Mobile equipment 1d directly transmits data to the server (with a transmission time of 200), so that the total transmission time is 200. In this way, transmission times from the pieces of mobile equipment 1a, 1c and 1d, which are session terminals, to the server can be equalized. A delay that occurs between the server and the audience terminal 1α is negligible because the server sends all of the pieces of data received from the terminals to the audience terminal 1α at the same time. By choosing alternative routes in this way, transmission times can be made practically equal. In applications of the present invention, transmission times may not necessarily be perfectly equalized as in the example in Fig. 2B but a slight difference between transmission times can occur. However, a delay of the order of 10 ms in audio (musical sound), for example, is indiscernible to the human ear and is acceptable in musical sessions and the like. Considering this fact, the server and the data synchronization system of the present invention enable musical sessions to be adequately implemented.

### [FIRST EMBODIMENT]

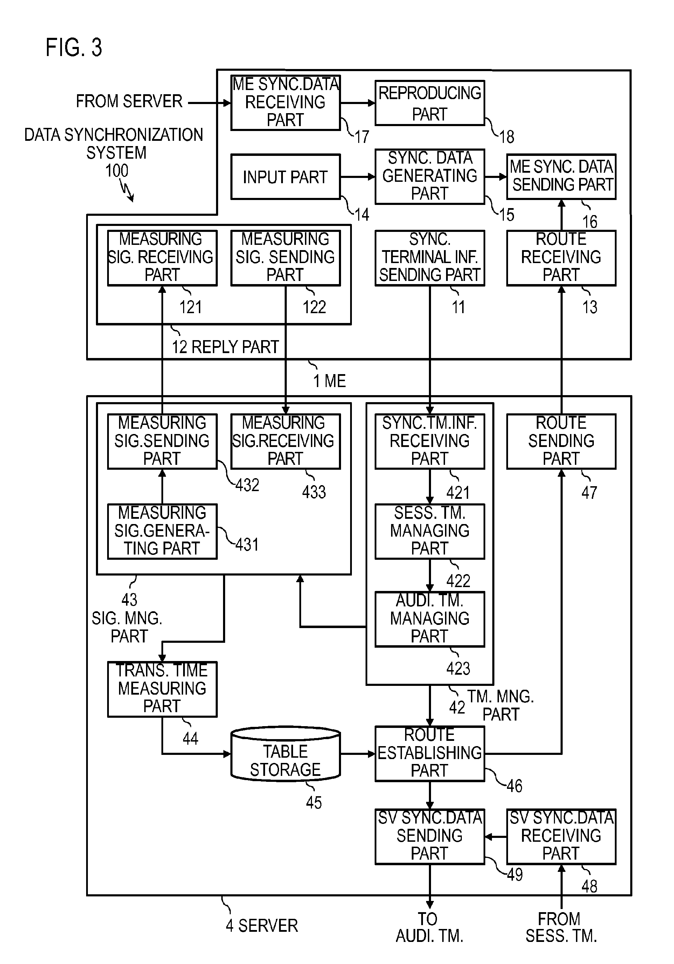

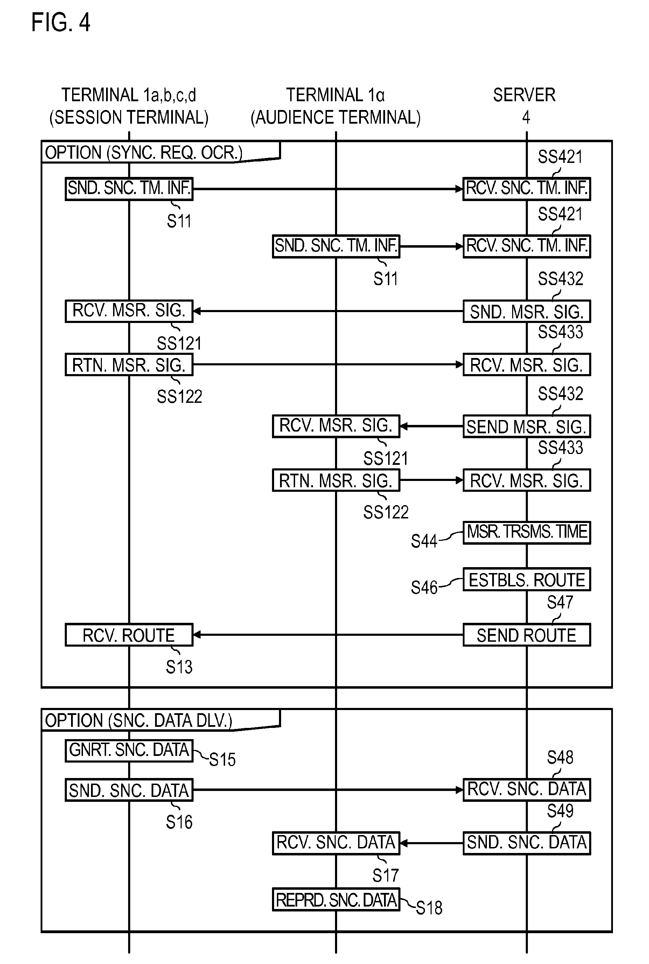

A data synchronization system according to a first embodiment will be described below with reference to Figs. 3 and 4. Fig. 3 is a block diagram illustrating a configuration of a data synchronization system 100 of the first embodiment. Fig. 4 is a sequence diagram illustrating operations of the data synchronization system 100 of the first embodiment. In the sequence diagram of Fig. 4, terminals 1a, 1b, 1c and 1d are session terminals and terminal 1α is an audience terminal as in Fig. 2.

As illustrated in Fig. 3, the data synchronization system 100 of the first embodiment includes mobile equipment 1 and a server 4. While only one piece of mobile equipment 1 is depicted in Fig. 3 due to space limitation, in reality the data synchronization system 100 of the first embodiment includes at least two pieces of mobile equipment 1 that have the same configuration. Similarly, only one piece of mobile equipment 1 is depicted in the block diagrams used for describing embodiments below, there are at least two pieces of mobile equipment 1 as in the first embodiment. The mobile equipment 1 includes a synchronizing terminal information sending part 11, a reply part 12, a route receiving part 13, an input part 14, a synchronous data generating part 15, an ME synchronous data sending part 16, an ME synchronous data receiving part 17, and reproducing part 18. The reply part 12 includes measuring signal receiving part 121 and measuring signal sending part 122. The server 4, on the other hand, includes a terminal managing part 42, a signal managing part 43, a transmission time measuring part 44, a table storage 45, a route establishing part 46, a route sending part 47, an SV synchronous data receiving part 48, and an SV synchronous data sending part 49. The terminal managing part 42 includes synchronizing terminal information receiving part 421, session terminal managing part 422, and audience terminal managing part 423. The signal managing part 43 includes measuring signal generating part 431, measuring signal sending part 432, and measuring signal receiving part 433. Operations of these components will be described below in chronological order.

When mobile equipment 1 attempts to participate in synchronous data transmission (reception) as a session terminal or an audience terminal, first the synchronizing terminal information sending part 11 sends information about a group in which the mobile equipment 1 is attempting to participate and information that specifies whether the mobile equipment 1 is attempting to participate in as a session terminal which sends data or an audience terminal which receives data (S11). Group information may be an identification number of the group, for example. For example, a group identification number that is 8-bit information is managed and an identification number, "01101110", for example, may be sent. Information indicating whether mobile equipment 1 is a session terminal or an audience terminal may be managed as a 2-bit terminal-type number, for example. The information indicating whether mobile equipment 1 is a session terminal or an audience terminal may be managed as a 2-bit terminal type number such as 01 for a session terminal, 10 for an audience terminal and 11 for a session-audience terminal. Additionally, a terminal ID, which may be 6-bit data, for identifying each of a plurality of session terminals and audience terminals may be added. Accordingly, the synchronizing terminal information sending part 11 can sent for example a group identification number, a terminal type number, and a terminal ID as 16-bit synchronizing terminal information.

The synchronizing terminal information receiving part 421 of the terminal managing part 42 of the server 4 receives synchronizing terminal information from mobile equipment 1 (SS421). The session terminal managing part 422 temporarily stores synchronizing terminal information associated with a session terminal(s) among pieces of received synchronizing terminal information. The audience terminal managing part 423 temporarily stores synchronizing terminal information associated with an audience terminal(s) and pieces of received synchronizing terminal information. Note that the session terminal managing part 422 and the audience terminal managing part 423 may be implemented by a single memory. Then the signal managing part 43 of the server 4 sends and receives a measuring signal to and from all pieces of mobile equipment 1 that sent synchronizing terminal information. More specifically, the measuring signal generating part 431 of the signal managing part 43 generates a measuring signal. Then the measuring signal sending part 432 sends the measuring signal to all pieces of mobile equipment that sent synchronizing terminal information (SS432). The measuring signal receiving part 121 of the reply part 12 of each piece of mobile equipment 1 receives the measuring signal from the server 4 (SS121). The measuring signal sending part 122 of the reply part 12 sends the measuring signal back to the server 4 (SS122). The measuring signal receiving part 433 of the signal managing part 43 of the server 4 receives the measuring signal sent back from the mobile equipment 1 (SS433).

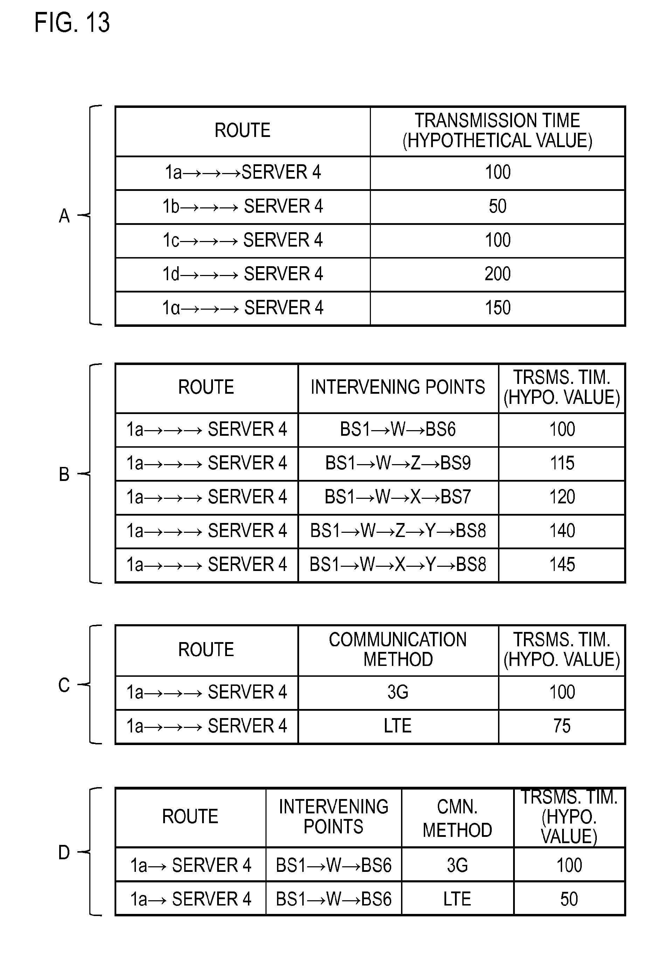

Then the transmission time measuring part 44 measures transmission time it takes for the measuring signal to be transmitted from every piece of mobile equipment 1 that sent synchronizing terminal information to the server 4. Specifically, the transmission time measuring part 44 uses the difference between the time of sending the measuring signal and the time of arrival of the measuring signal sent back from mobile equipment 1 to measure the transmission time from the mobile equipment 1 to the server 4 (S44). Ping can be used for implementation of the signal managing part 43 and the transmission time measuring part 44. Ping is software used for checking the reachability of a node. Ping can be used to calculate the difference between the time of transmission of a measuring signal (packet) and the time of reception of the measuring signal to determine roundtrip latency (round trip time: RTT) or one-way latency. The transmission time measuring part 44 stores the measured transmission times in the table storage 45 along with information identifying the routes (for example information identifying the pieces of mobile equipment 1 such as the group identification number, terminal type numbers and terminal IDs). An example of a table stored in the table storage 45 will be described with reference to Fig. 13A. Suppose, for example, that the pieces of mobile equipment 1a, 1b, 1c and 1α belong to the same group as illustrated in Fig. 2. The table to be stored in the table storage 45 is generated by combining the routes to the members of the group and the transmission times over the routes as presented in Fig. 13A. In the example in Fig. 13A, the transmission time (a hypothetical value) from mobile equipment 1a to the server 4 is 100, the transmission time from mobile equipment 1b to the server 4 is 50, the transmission time from the mobile equipment 1c to the server 4 is 100, the transmission time from mobile equipment 1d to the server 4 is 200, and the transmission time from mobile equipment 1α to the server 4 is 150. Then the route establishing part 46 determines whether to change the route from each of the session terminals to the server 4 to an alternative route that passes through any other piece of mobile equipment 1 on the basis of whether or not the transmission times from the session terminals to the server 4 in the same group are practically equal, as described with reference to Fig. 2, and establishes routes on the basis of the determination (S46). In the example in Fig. 2, whether to establish an alternative route is determined on the basis of whether the transmission times from the pieces of mobile equipment 1a, 1b, 1c and 1d that act as session terminals belonging to the same group to the server 4 are practically equal. For example, in the example in Fig. 2, the alternative route from mobile equipment 1 a to the server 4 that passes through mobile equipment 1b is established. Similarly, the alternative route from mobile equipment 1c to the server 4 that passes through mobile equipment 1b is established. The route sending part 47 sends the routes thus established to all of the session terminals (S47). Note that a notification of the routes needs to be sent to the session terminals but does not necessarily need to be sent to the audience terminal. The route receiving part 13 of each piece of mobile equipment 1 that acts as session terminal receives the route notification sent from the server 4 (S 13). This completes the route establishing process.

A process for sending and receiving data will be described below. The input part 14 of mobile equipment 1 that acts as a session terminal acquires original data (for example, audio, music and/or video data) used for synchronous communication. The input part 14 includes a microphone, a video camera and the like. The synchronous data generating part 15 converts the original data that the input part 14 acquired to a format appropriate to synchronous communication (S15). The ME synchronous data sending part 16 sends the data generated by the synchronous data generating part 15 to the server 4 (S16). At step S16, the data is sent over the route provided from the route sending part 47 of the server 4 beforehand. Source routing may be used as a method for mobile equipment 1 to send packet data that specifies the route. Source routing allows mobile equipment 1 to explicitly specify a route. The SV synchronous data receiving part 48 of the server 4 receives the data sent over the routes from the pieces of mobile equipment 1 that act as session terminals (S48). The SV synchronous data sending part 49 sends the received data to the mobile equipment 1 that acts as an audience terminal in the same group as the pieces of mobile equipment 1 that have sent the received data (S49). In the example in Fig. 2, the server 4 forwards the data to mobile equipment 1α which is an audience terminal in the same group as the pieces of mobile equipment 1a, 1b, 1c and 1d, which are session terminals. The ME synchronous data receiving part 17 of each piece of mobile equipment 1 that acts as an audience terminal receives the data sent from the server 4 (S17). The reproducing part 18 of each piece of mobile equipment 1 that acts as an audience terminal starts reproduction processing upon reception of the data without applying delay processing to the received data (S18).

As has been described above, in the data synchronization system 100 of the first embodiment, the route establishing part 46 of the server 4 establishes routes by changing routes to alternative routes so that transmission times are practically equalized, the ME synchronous data sending part 16 of each session terminal sends data over the route established by the route establishing part 46 of the server 4, the SV synchronous data receiving part 48 and the SV synchronous data sending part 49 of the server 4 forward the data to the audience terminal. Thus, pieces of data to be received at the audience terminal can be synchronized without performing padding.

### [SECOND EMBODIMENT]

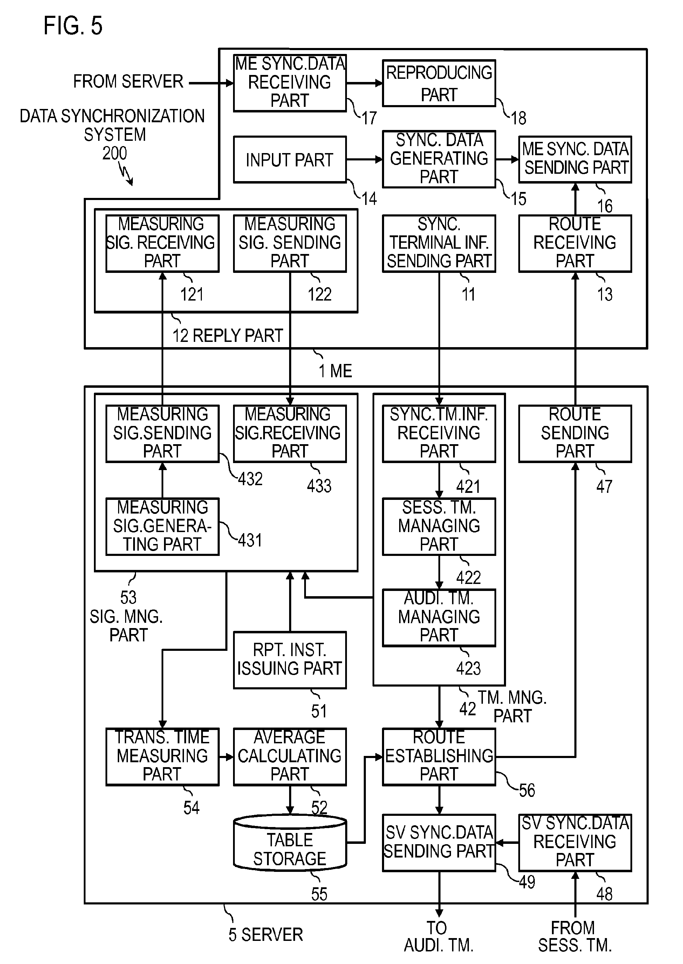

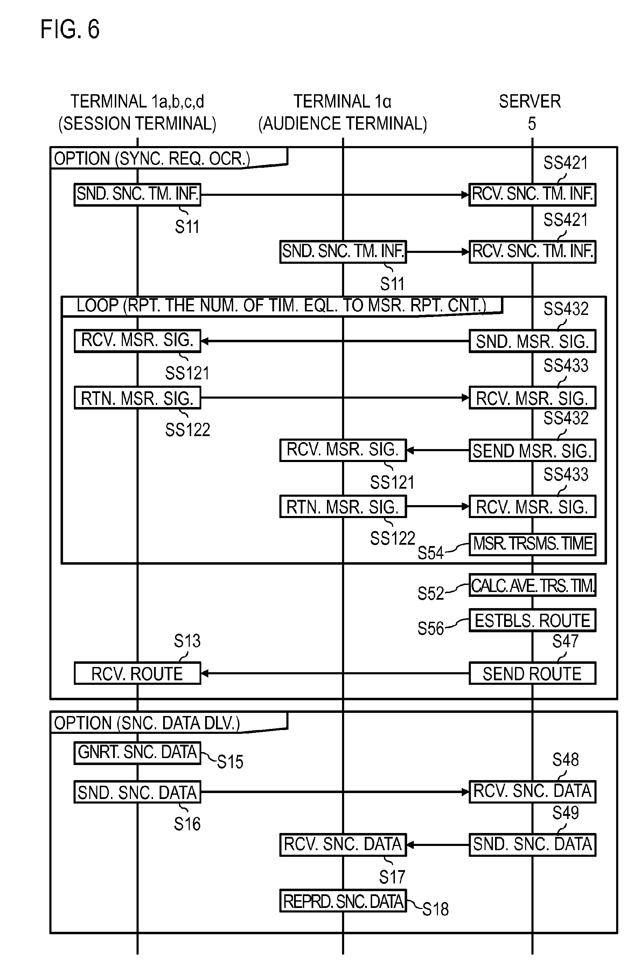

A data synchronization system of a second embodiment which includes an average calculating feature added to the transmission time measuring feature of the first embodiment will be described with reference to Figs. 5 and 6. Fig. 5 is a block diagram illustrating a configuration of a data synchronization system 200 of the second embodiment. Fig. 6 is a sequence diagram illustrating operations of the data synchronization system 200 of the second embodiment. In the sequence diagram of Fig. 6, terminals 1a, 1b, 1c and 1d are session terminals and terminal 1α is an audience terminal as in Fig. 2.

As illustrated in Fig. 5, the data synchronization system 200 of the second embodiment includes mobile equipment 1 and a server 5. The mobile equipment 1 is the same as the mobile equipment 1 of the first embodiment. The server 5, on the other hand, includes a terminal managing part 42, a signal managing part 53, a repeat instruction issuing part 51, a transmission time measuring part 54, an average calculating part 52, a table storage 55, a route establishing part 56, a route sending part 47, an SV synchronous data receiving part 48, and an SV synchronous data sending part 49. The components other than the signal managing part 53, the repeat instruction issuing part 51, the transmission time measuring part 54, the average calculating part 52, the table storage 55 and the route establishing part 56 are the same as those of the server 4 of the first embodiment that have the same names and the same reference numerals and therefore repeated description thereof will be omitted.

The following description will focus on differences from the first embodiment. The repeat instruction issuing part 51 sends a repeat instruction that indicates a predetermined measurement repeat count to the signal managing part 53. The signal managing part 53 sends a measuring signal the number of times specified by the repeat instruction and the reply part 12 of the mobile equipment 1 sends back the measuring signal (loop repeated the number of times equal to measurement repeat count; SS432, SS121, SS122, SS433). The transmission time measuring part 54 repeatedly performs measurement of transmission time the predetermined number of times (loop repeated the number of times equal to measurement repeat count; S54). The average calculating part 52 calculates the average of the transmission times measured the predetermined times for the same route (S52). Hereinafter the average is referred to as the reference transmission time. The route establishing part 56 establishes routes so that average transmission times from pieces of mobile equipment 1 that act as session terminals that belong to the same group to the server 5 are practically equalized. The repeat instruction issuing part 51, the average calculating part 52 and the transmission time measuring part 54 of the second embodiment can be implemented by the ping software mentioned above. Using the ping software, transmission of a packet may be repeated 10 times, for example, and results such as a packet loss of 0%, a minimum round trip time of 21.9 ms, an average round trip time of 24.1 ms, and a maximum round trip time of 25.7 ms can be obtained.

As has been described above, the data synchronization system 200 of the second embodiment has, in addition to the effect of the first embodiment, the effect of accommodating measurement errors to achieve more stable synchronization because the average transmission times obtained by measuring transmission times multiple times and averaging the measured transmission times are used to establish routes.

### [THIRD EMBODIMENT]

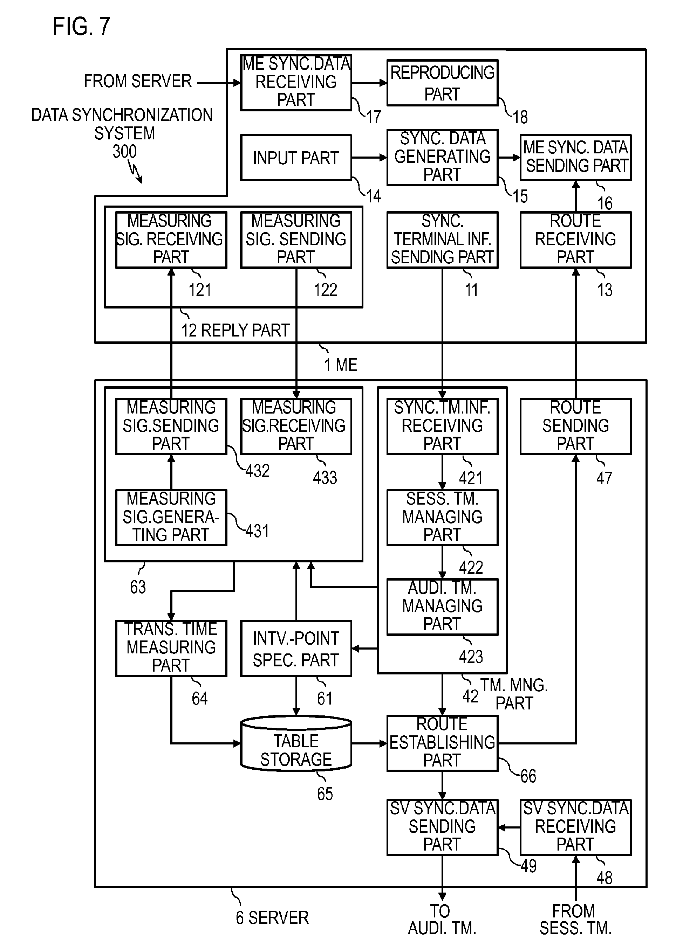

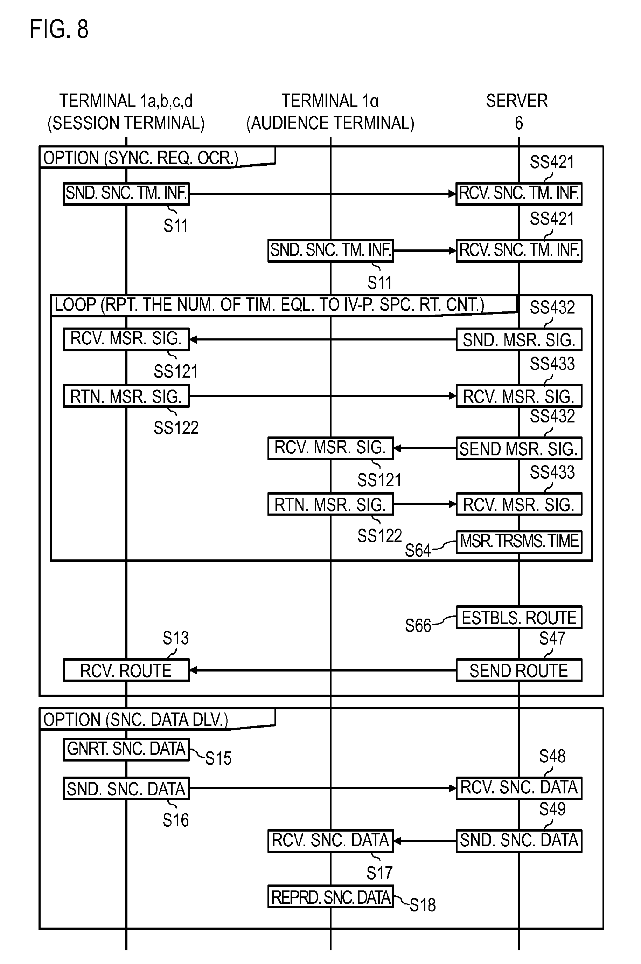

Referring to Figs. 7 and 8, a data synchronization system of a third embodiment will be described in which the route establishing feature of the server 4 of the first embodiment is extended to establish routes on the basis of intervening-point specified routes for which an intervening base station and an intervening switching center are specified. Fig. 7 is a block diagram illustrating a configuration of a data synchronization system 300 of the third embodiment. Fig. 8 is a sequence diagram illustrating operations of the data synchronization system 300 of the third embodiment. In the sequence diagram of Fig. 8, terminals 1a, 1b, 1c and 1d are session terminals and terminal 1α is an audience terminal as in Fig. 2.

As illustrated in Fig. 7, the data synchronization system 300 of the third embodiment includes mobile equipment 1 and a server 6. The mobile equipment 1 is the same as the mobile equipment 1 in the first embodiment. The server 6, on the other hand, includes a terminal managing part 42, a signal managing part 63, an intervening-point specifying part 61, a transmission time measuring part 64, a table storage 65, a route establishing part 66, a route sending part 47, an SV synchronous data receiving part 48, and an SV synchronous data sending part 49. The components other than the signal managing part 63, the intervening-point specifying part 61, the transmission time measuring part 64, the table storage 65, and the route establishing part 66 are the same as those of the server 4 of the first embodiment that have the same names and the same reference numerals and therefore repeated description of which will be omitted.

The following description will focus on differences from the first embodiment. The intervening-point specifying part 61 acquires information concerning base stations, switching centers, and controllers on a mobile communication network from the network at regular intervals. For example, the intervening-point specifying part 61 acquires information about addition, removal, relocation and replacement of base stations, switching centers, and controllers on the mobile communication network. In this way, the intervening-point specifying part 61 constantly acquires the up-to-date information about the mobile communication network. When the terminal managing part 42 receives synchronizing terminal information from mobile equipment 1 as in the first embodiment, the intervening-point specifying part 61 identifies a base station nearest to the mobile equipment 1 on the basis of intervening point information in header information of the synchronizing terminal information received by the terminal managing part 42 and selects all possible intervening-point-specified routes from the base station to the server 6. In the example in Fig. 1A, a plurality of intervening-point-specified routes from mobile equipment 1a to the server 6 can be found by considering the depicted routes alone: a route passing through base station 2-1 (BS 1), switching center 3W (W) and base station 2-6 (BS6); a route passing through base station 2-1 (BS1), switching center 3W (W), switching center 3X (X) and base station 2-7 (BS7); a route passing through base station 2-1 (BS 1), switching center 3W (W), switching center 3Z (Z) and base station 2-9 (BS9), and so on. The intervening-point specifying part 61 issues an intervening point specifying instruction that specifies intervening-point-specified routes to the signal managing part 63. The signal managing part 63 sends a measuring signal over each of the intervening-point-specified routes specified in the intervening point specifying instruction and the reply part 12 of the mobile equipment 1 sends back the measuring signal (loop repeated the number of times equal to the intervening-point-specified route count; SS432, SS121, SS122, SS433). The transmission time measuring part 64 measures transmission time for each of the intervening-point-specified routes specified by the intervening point specifying instruction (loop repeated the number of time equal to intervening-point-specified route count; S64). The transmission time measuring part 64 stores the measured transmission times in the table storage 65 along with information identifying the routes (such as information identifying the mobile equipment 1 and the intervening point specifying instruction from the intervening-point specifying part 61). An example of a table stored in the table storage 65 will be described with reference to Fig. 13B. A table for mobile equipment 1a described with respect to Fig. 2 is taken as an example. The table stored in the table storage 65 is generated by combining each intervening-point-specified route with the transmission time over the intervening-point-specified route as presented in Fig. 13B. In the example in Fig. 13B, the transmission time (a hypothetical value) for each intervening-point-specified route from mobile equipment 1a to the server 6 is stored. For example, the transmission time (a hypothetical value) over the route that passes through BS1, W and BS6 is 100 whereas the transmission time (a hypothetical value) over the route that passes through BS1, W, Z and BS9 is 115. Similarly, the transmission time (a hypothetical value) over the route that passes through BS1, W, X, and BS7 is 120, and so on. The route establishing part 66 establishes routes by selecting intervening-point-specified routes so that the transmission times from the pieces of mobile equipment 1 that act as session terminals in the same group to the server 6 are practically equalized and performing changing to the alternative routes (S66).

Thus, the data synchronization system 300 of the third embodiment has, in addition to the effect of the first embodiment, the effect of more precisely establishing routes to achieve synchronization with a higher level of precision because routes are established by selecting from among intervening-point-specified routes for which base stations and switching centers to pass through are specified.

### [FOURTH EMBODIMENT]

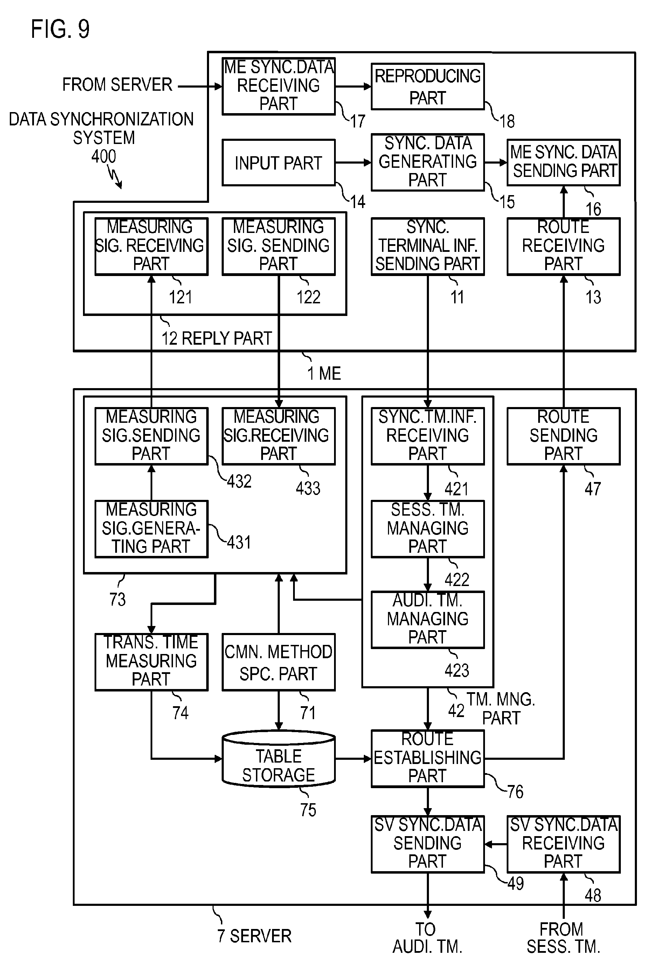

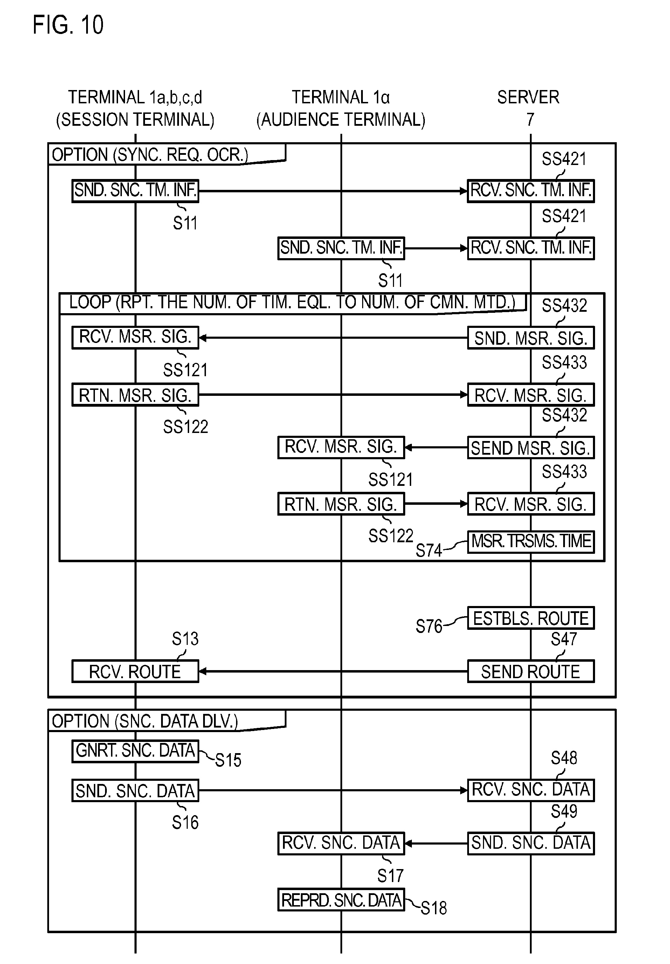

A data synchronization system of a fourth embodiment will be described below with reference to Figs. 9 and 10 in which the route establishing feature of the first embodiment is extended to specify routes based on communication-method-specified routes for which communication methods are specified. Fig. 9 is a block diagram illustrating a configuration of a data synchronization system 400 of the fourth embodiment. Fig. 10 is a sequence diagram illustrating operations of the data synchronization system 400 of the fourth embodiment. In the sequence diagram of Fig. 10, terminals 1a, 1b, 1c and 1d are session terminals and terminal 1α is an audience terminal as in Fig. 2.

As illustrated in Fig. 9, a data synchronization system 400 of the fourth embodiment includes mobile equipment 1 and a server 7. The mobile equipment 1 is the same as the mobile equipment 1 of the first embodiment. The server 7, on the other hand, includes a terminal managing part 42, a signal managing part 73, a communication method specifying part 71, a transmission time measuring part 74, a table storage 75, a route establishing part 76, a route sending part 47, an SV synchronous data receiving part 48, and an SV synchronous data sending part 49. The components other than the signal managing part 73, the communication method specifying part 71, the transmission time measuring part 74, the table storage 75 and the route establishing part 76 are the same as those of the server 4 of the first embodiment that have the same names and the same reference numerals and therefore repeated description of which will be omitted.

The following description will focus on differences from the first embodiment. The communication method specifying part 71 issues a communication method specifying instruction that specifies a communication method to be used in communication between mobile equipment 1 and the server 7 to the signal managing part 73. The signal managing part 73 sends a measuring signal for each communication method specified in the communication method specifying instruction and the reply part 12 of mobile equipment 1 sends back the measuring signal (loop repeated the number of times equal to the number of communication methods; SS432, SS121, SS122, SS433). The transmission time measuring part 74 performs measurement of the transmission time for each communication method specified by the communication method specifying instruction (loop repeated the number of times equal to the number of communication methods; S74). The transmission time measuring part 74 stores combinations of the measured transmission times, information identifying routes (information identifying the mobile equipment 1) and information identifying the communication methods in the table storage 75. An example of a table stored in the table storage 75 will be described with reference to Fig. 13C. A table for mobile equipment 1a described with respect to Fig. 2 is taken as an example. The table stored in the table storage 75 is generated by combining each communication-method-specified route and the transmission time over the communication-method-specified route as illustrated in Fig. 13C. In the example in Fig. 13C, transmission time (a hypothetical value) from mobile equipment 1 a to the server 7 is stored in association with each communication method. For example, the transmission time (a hypothetical value) when the communication method 3G is used is 100 whereas the transmission time (a hypothetical value) when the communication method LTE is used is 75. The route establishing part 76 establishes routes by selecting from the routes for which communication methods are specified so that the transmission times from the pieces of mobile equipment 1 that act as session terminals in the same group to the server 7 are practically equalized and performing changing to the alternative routes (S76).

Thus, the data synchronization system 400 of the fourth embodiment has, in addition to the effect of the first embodiment, the effect of more precisely establishing routes to achieve synchronization with a higher level of precision because routes are established by selecting from among routes for which communication methods are specified.

### [FIFTH EMBODIMENT]

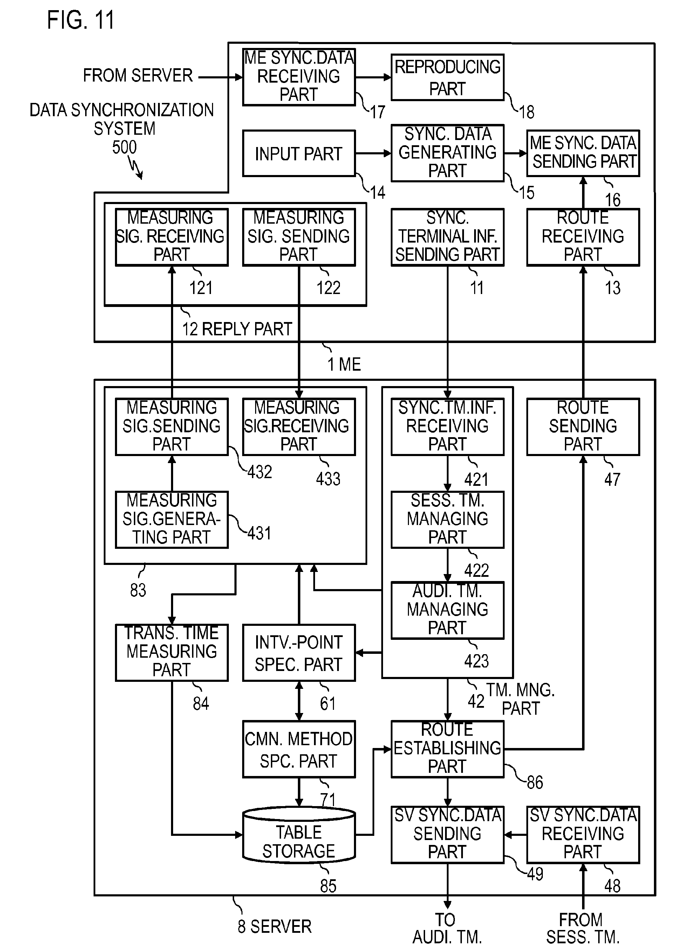

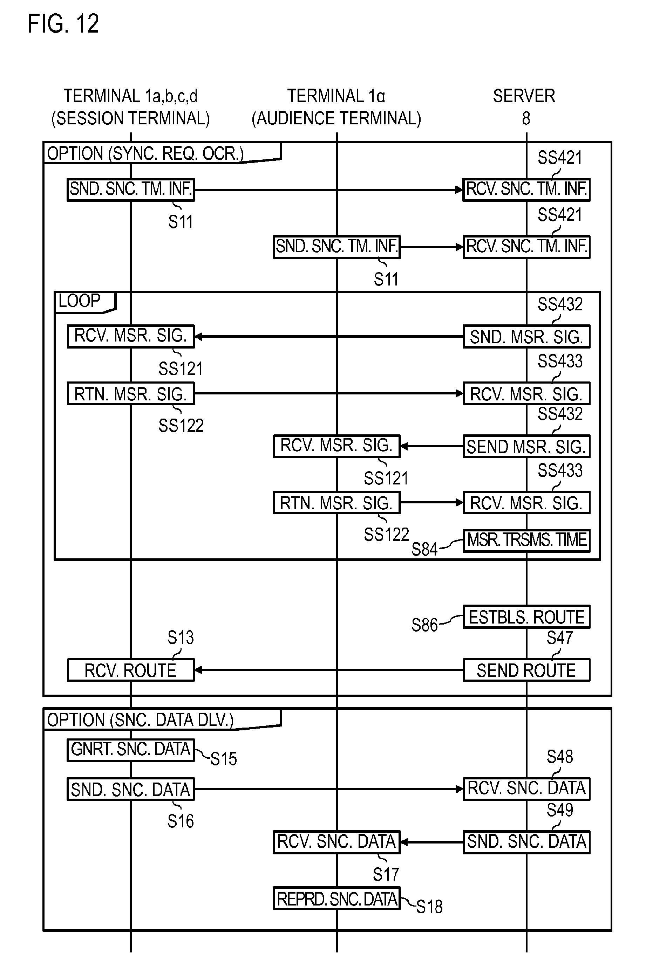

A data synchronization system of a fifth embodiment, which is the combination of the third and fourth embodiments, will be described with reference to Figs. 11 and 12. Fig. 11 is a block diagram illustrating a configuration of a data synchronization system 500 of the fifth embodiment. Fig. 12 is a sequence diagram illustrating operations of the data synchronization system 500 of the fifth embodiment. In the sequence diagram of Fig. 12, terminals 1a, 1b, 1c and 1d are session terminals and terminal 1α is an audience terminal as in Fig. 2.

As illustrated in Fig. 11, the data synchronization system 500 of the fifth embodiment includes mobile equipment 1 and a server 8. The mobile equipment 1 is the same as the mobile equipment 1 in the first embodiment. The server 8, on the other hand, includes a terminal managing part 42, a signal managing part 83, an intervening-point specifying part 61, a communication method specifying part 71, a transmission time measuring part 84, a table storage 85, a route establishing part 86, a route sending part 47, an SV synchronous data receiving part 48, and an SV synchronous data sending part 49. The components other than the signal managing part 83, the transmission time measuring part 84, the table storage 85, and the route establishing part 86 are the same as those of the server 4 of the first embodiment, the server 6 of the third embodiment, and the server 7 of the fourth embodiment that have the same names and the same reference numerals and therefore repeated description thereof will be omitted.

The server 8 of the fifth embodiment measures the transmission time over each intervening-point-and-communication-method-specified route, which is a combination of an intervening-point-specified route in the third embodiment and a communication-method-specified route in the fourth embodiment, and establishes routes by taking into consideration the intervening-point-and-communication-method-specified routes. Specifically, the transmission time measuring part 84 measures the transmission time for each intervening-point-specified route and each available communication method (loop repeated the number of times equal to the intervening-point-specified route count x the number of communication methods; S84). The transmission time measuring part 84 stores combinations of the measured transmission times, information identifying the intervening-point-specified routes, and information identifying the communication methods in the table storage 85. Taking a table for mobile equipment 1a described with reference to Fig. 2 as an example, the table to be stored in the table storage 85 is generated by combining each intervening-point-and-communication-method-specified route and the transmission time over the intervening-point-and communication-method-specified route as illustrated in Fig. 13D. The route establishing part 86 establishes routes by selecting from the routes for which intervening switching centers and base stations and communication methods are specified, so that the transmission times from the pieces of mobile equipment 1 that act as session terminals in the same group to the server 8 are practically equalized and performing changes to the alternative routes (S86).

Thus the data synchronization system 500 of the fifth embodiment has, in addition to the effect of the first embodiment, the effect of more precisely establishing routes to achieve synchronization with a higher level of precision because the routes are established by selecting from among routes for which intervening base stations and switching centers and communication methods are specified.

The processes described above may be performed not only in time sequence as is written or may be performed in parallel with one another or individually, depending on the throughput of the apparatuses that perform the processes or requirements. It would be understood that other modifications can be made without departing from the spirit of the present invention.

If any of the configurations described above is implemented by a computer, the processes of the functions the apparatuses need to include are described by a program. The processes of the functions are implemented on the computer by executing the program on the computer.

The program defining the processes can be recorded on a computer-readable recording medium. The computer-readable recording medium may be any recording medium such as a magnetic recording device, an optical disc, a magneto-optical recording medium, and a semiconductor memory, for example.

The program is distributed by selling, transferring, or lending a portable recording medium on which the program is recorded, such as a DVD or a CD-ROM. The program may be stored on a storage device of a server computer and transferred from the server computer to other computers over a network, thereby distributing the program.

A computer that executes the program first stores the program recorded on a portable recording medium or transferred from a server computer into a storage device of the computer. When the computer executes the processes, the computer reads the program stored on the recording medium of the computer and executes the processes according to the read program. In another mode of execution of the program, the computer may read the program directly from a portable recording medium and execute the processes according to the program or may execute the processes according to the program each time the program is transferred from the server computer to the computer. Alternatively, the processes may be executed using a so-called ASP (Application Service Provider) service in which the program is not transferred from a server computer to the computer but process functions are implemented by instructions to execute the program and acquisition of the results of the execution. Note that the program in this mode encompasses information that is provided for processing by an electronic computer and is equivalent to the program (such as data that is not direct instructions to a computer but has the nature that defines processing of the computer).

While the apparatuses are configured by causing a computer to execute a predetermined program in the embodiments described above, at least some of the processes may be implemented by hardware.

## Claims

1. A server synchronizing data sent from two or more pieces of mobile equipment, the server comprising:
a terminal managing part receiving, from each of the pieces of mobile equipment, synchronizing terminal information specifying a group to which the piece of mobile equipment belongs and specifying whether the piece of mobile equipment participates in the group as a session terminal sending data or an audience terminal receiving data;
a transmission time measuring part measuring transmission time from the piece of mobile equipment to the server;
a route establishing part determining whether or not to change a route from each piece of mobile equipment that acts as a session terminal belonging to the same group to the server to an alternative route passing through any other piece of mobile equipment on the basis of whether or not the transmission times from the pieces of mobile equipment that act as session terminals belonging to the same group to the server are practically equal and establishing a route on the basis of the determination;
a route sending part sending the established route to the pieces of mobile equipment that act as session terminals;
an SV synchronous data receiving part receiving data sent from the pieces of mobile equipment that act as session terminals through the established routes; and
an SV synchronous data sending part sending the received data to mobile equipment that acts as an audience terminal that belongs to the same group as the pieces of mobile equipment that have sent the received data.

2. The server according to claim 1, further comprising an average calculating part calculating an average of measured transmission times over the same route as average transmission time,
wherein the transmission time measuring part performs measurement of the transmission time a predetermined number of times; and
the route establishing part establishes a route so that the average transmission times from the pieces of mobile equipment that act as session terminals belonging to the same group to the server are practically equalized.

3. The server according to claim 1 or 2, further comprising an intervening-point specifying part issuing an intervening-point specifying instruction specifying a switching center and a base station through which a route from each of the pieces of mobile equipment to the server passes,
wherein the transmission time measuring part performs measurement of the transmission time over each of intervening-point specified routes, each of the intervening-point specified routes being a route passing through a switching center and a base station that are specified by the intervening-point specifying instruction; and
the route establishing part establishes a route by selecting a route from the intervening-point-specified routes so that transmission times from the pieces of mobile equipment that act as session terminals belonging to the same group to the server are practically equalized and performing changing to the alternative route.

4. The server according to any one of claims 1 to 3, further comprising a communication method specifying part issuing a communication method specifying instruction specifying a communication method used for communication between each of the pieces of mobile equipment and the server,
wherein the transmission time measuring part performs measurement of the transmission time of each transmission method specified by the communication method specifying instruction; and
the route establishing part establishes a route by selecting a route from the routes for which the communication methods are specified so that transmission times from the pieces of mobile equipment that act as session terminals belonging to the same group to the server are practically equalized and performing changing to the alternative route.

5. The server according to any one of claims 1 to 4, further comprising:
an intervening-point specifying part issuing an intervening-point specifying instruction specifying a switching center and a base station through which a route from each of the pieces of mobile equipment to the server passes; and
a communication method specifying part issuing a communication method specifying instruction specifying a communication method used for communication between each of the pieces of mobile equipment and the server,
wherein the transmission time measuring part performs measurement of the transmission time over each route passing through a switching center and a base station specified by the intervening-point specifying instruction and of each communication method specified by the communication method specifying instruction; and
the route establishing part establishes a route by selecting a route from among the routes for which a switching center and a base station through which the routes pass and a communication method are specified, so that transmission times from the pieces of mobile equipment that act as session terminals belonging to the same group to the server are practically equalized and performing changing to the alternative route.

6. A data synchronization system including two or more pieces of mobile equipment and a server,
the server comprising:
a terminal managing part receiving, from each of the pieces of mobile equipment, synchronizing terminal information specifying a group to which the piece of mobile equipment belongs and specifying whether the piece of mobile equipment participates in the group as a session terminal sending data or an audience terminal receiving data;
a transmission time measuring part measuring transmission time from the piece of mobile equipment to the server;
a route establishing part determining whether or not to change a route from each piece of mobile equipment that acts as a session terminal belonging to the same group to the server to an alternative route passing through any other piece of mobile equipment on the basis of whether or not the transmission times from the pieces of mobile equipment that act as session terminals belonging to the same group to the server are practically equal and establishing a route on the basis of the determination;
a route sending part sending the established route to the pieces of mobile equipment that act as session terminals;
an SV synchronous data receiving part receiving data sent from the pieces of mobile equipment that act as session terminals through the established routes; and
an SV synchronous data sending part sending the received data to an audience terminal that belongs to the same group as the pieces of mobile equipment that have sent the received data; and
each of the pieces of mobile equipment comprising:
a synchronizing terminal information sending part sending the synchronizing terminal information;
a route receiving part receiving a route sent from the server;
an ME synchronous data sending part sending the data through the received route when the piece of mobile equipment acts as a session terminal; and
an ME synchronous data receiving part receiving data from the server when the piece of mobile equipment acts as an audience terminal.

7. The data synchronization system according to claim 6, wherein the server further comprises an average calculating part calculating an average of measured transmission times over the same route as average transmission time;
the transmission time measuring part performs measurement of the transmission time a predetermined number of times; and
the route establishing part establishes a route so that the average transmission times from the pieces of mobile equipment that act as session terminals belonging to the same group to the server are practically equalized.

8. The data synchronization system according to claim 6 or 7,
wherein the server further comprises an intervening-point specifying part issuing an intervening-point specifying instruction specifying a switching center and a base station through which a route from each of the pieces of mobile equipment to the server passes;
the transmission time measuring part performs measurement of the transmission time over each of intervening-point specified routes, each of the intervening-point specified routes being a route passing through a switching center and a base station that are specified by the intervening-point specifying instruction; and
the route establishing part establishes a route by selecting a route from the intervening-point-specified routes so that transmission times from the pieces of mobile equipment that act as session terminals belonging to the same group to the server are practically equalized and performing changing to the alternative route.

9. The data synchronization system according to any one of claims 6 to 8,
wherein the server further comprises a communication method specifying part issuing a communication method specifying instruction specifying a communication method used for communication between each of the pieces of mobile equipment and the server;
the transmission time measuring part performs measurement of the transmission time of each transmission method specified by the communication method specifying instruction; and
the route establishing part establishes a route by selecting a route from the routes for which the communication methods are specified so that transmission times from the pieces of mobile equipment that act as session terminals belonging to the same group to the server are practically equalized and performing changing to the alternative route.

10. The data synchronization system according to any one of claims 6 to 9,
wherein the server further comprises:
an intervening-point specifying part issuing an intervening-point specifying instruction specifying a switching center and a base station through which a route from each of the pieces of mobile equipment to the server passes; and
a communication method specifying part issuing a communication method specifying instruction specifying a communication method used for communication between each of the pieces of mobile equipment and the server;
the transmission time measuring part performs measurement of the transmission time over each route passing through a switching center and a base station specified by the intervening-point specifying instruction and of each communication method specified by the communication method specifying instruction; and
the route establishing part establishes a route by selecting a route from among the routes for which a switching center and a base station through which the routes pass and a communication method are specified, so that transmission times from the pieces of mobile equipment that act as session terminals belonging to the same group to the server are practically equalized and performing changing to the alternative route.
